# EUROPEAN PATENT SPECIFICATION

(11) **EP 2 413 008 B1**
(45) Date of publication and mention of the grant of the patent: **20.03.2013**
(21) Application number: 11175081.6
(22) Date of filing: 22.07.2011
(51) Int. Cl.: F16K 31/40

(54) **Electromechanically actuated membrane valve, particularly for branching ducts of a fluid of sprinkling and/or weed control systems and the like**
Elektromechanisch betätigtes Membranventil, insbesondere zum Verzweigen der Leitungen für eine Flüssigkeit in Sprinkler- und/oder Unkrautbekämpfungssystemen und dergleichen
Soupape à membrane à actionnement électromécanique, en particulier pour des conduits ramifiés de systèmes d'arrosage et/ou de lutte contre les mauvaises herbes et similaires

(30) Priority: 28.07.2010 IT MO20100218
(43) Date of publication of application: 01.02.2012
(73) Proprietor: Arag S.r.l., 42048 Rubiera (Reggio Emilia) (IT)
(72) Inventor: Schiavone, Mario, 42122 REGGIO EMILIA (IT); Gubertini, Francesco, 41043 FORMIGINE MO (IT)
(74) Representative: Modiano, Micaela Nadia

(56) References cited:
- EP-A1- 0 530 947
- US-A- 3 784 154
- US-A- 5 131 627
- US-A- 6 123 320

## Description

The present invention relates to an electromechanically actuated membrane valve, particularly for branching ducts of a fluid of sprinkling and/or weed control systems and the like.

Electromechanically actuated valves have been disclosed for example in documents US 3 784 154 or US 5 131 627.

In the field of agriculture and, in particular, with regard to sprinkling techniques, it is known to use sprinkler machines designed to accurately distribute irrigation liquids over the ground, such as fertilizers, fluids for herbicide treatments, anticryptogamics, insecticides, pesticides, water and other liquids.

More precisely, sprinkler machines of the known type, which are generally fixed or pulled by a tractor that travels over the crop to be sprinkled, are basically constituted by a chassis supporting a tank filled with the fluid to be sprinkled and associated with a pumping assembly that supplies one or more sprinkler bars used to distribute the fluid.

Going further into detail, sprinkler bars of the known type, which can be of the horizontal type for herbaceous crops, vertical or arched for arboreal crops, are constituted by a supporting structure associated with the above-mentioned supporting chassis to which pipes for conveying the fluid to be sprinkled are fixed.

More specifically, the conveyance pipes, which are supplied by the pumping assembly by way of suitable valves for controlling and adjusting the flow, have a plurality of branching assemblies and assemblies for dispensing the fluid, each of which is provided with a respective shut-off valve with the functions of stopping and/or allowing the passage of fluid inside the branching assembly and, if the passage is to be stopped, of preventing dripping of the fluid.

Each branching assembly is constituted by an external duct and by an internal duct, which are mutually coaxial, between which an interspace is formed with the external duct connected, at one end, to the conveyance pipe from which it receives the fluid, whereas the internal duct is connected to means of dispensing the fluid constituted, for example, by one or more atomizer nozzles.

At the opposite end the two ducts, external and internal, are connected to each other and associated with a shut-off valve that is basically constituted by a blocking element alternately adapted to assume an open configuration, in which the fluid passes from the external duct to the internal duct and arrives at the atomizer nozzles, and a closed configuration, in which the two ducts are isolated from each other so that the fluid does not reach the nozzles.

Among the shut-off valves of the known type are spring-loaded valves, the function of which is substantially anti-drip, that are constituted by a disk-like membrane kept pressed against the ends of the ducts, internal and external, by a preloaded compression spring.

The fluid introduced into the interspace between the two ducts exerts a pressure on the membrane that is such as to overcome the resistance of the spring and thus move away the membrane, connecting the external duct with the internal duct. In this case we have valves that are directly actuated by the fluid.

Alternatively, pneumatically actuated piston valves are known, of the type that are normally open or normally closed, constituted by a cylinder inside which is a piston accommodated so that it can slide, in a straight and alternating motion, fitted at the head with a plug of the internal duct of the branching assembly.

In more detail, under the action of a flow of compressed air, the piston is caused to slide alternately between the open configuration, in which the plug is extracted from the internal duct which thus communicates with the external duct, and the closed configuration, in which the plug is protracted into the internal duct thus blocking it and preventing the passage of the fluid coming from the external duct.

Furthermore, pneumatically-actuated membrane valves are known of the type that is usually open or usually closed, that are constituted by a cylinder inside which a piston is mounted, so that it is able to slide in a straight and alternating motion, the head of which pushes a disk-like membrane to close the ends of the ducts, external and internal, of the branching assembly.

In this way, a flow of compressed air moves the piston between the open configuration, in which the membrane is spaced and the two ducts, internal and external, are connected, and the closed configuration, in which the membrane is kept pressed against the two ducts thus preventing their connection.

Membrane valves that are normally open, of the type described above, have a reaction spring that, in the absence of a flow of air, keeps the piston in the open configuration of the branching assembly, and air is introduced to bring it to the closed configuration.

Conversely, membrane valves that are normally closed have a reaction spring which, in the absence of a flow of air, keeps the piston in the closed configuration of the branching assembly, and air is introduced to bring it to the open configuration.

Finally, a third type of valve involves an actuation of the electromechanical type, for enabling a more instantaneous control of the opening and closing of the valve, in which for example, the plug of the valve is commanded to close and open by a solenoid.

These electromechanically actuated valves comprise a valve body, inside which an actuator is slidably associated, provided with a membrane plug for the duct for dispensing the fluid.

The actuator, generally of the metal type, is moved between an open configuration and a closed configuration of the duct by a solenoid, which, electrically excited, generates a magnetic field that is such as to attract the actuator and thus move it along the directional axis of action thereof.

For overcoming the drawback of having to provide metal actuators, with the constructive limitations that such materials involve, for reducing a further drawback deriving from the fact that the solenoids conventionally used are often not sufficient to move the actuator if high pressure levels are necessary for the dispensed fluid, solenoid valves of the known type have been developed which comprise a pressure plate having a first and a second hole with the actuator configured in such a way as to selectively block the first or the second hole.

Moreover, in solenoid valves of the known type a spring is provided that is adapted to move the plate away from the actuator so that the actuator uncovers the second hole thus allowing the fluid to pass through it. The closing of the first hole, which occurs at the same time as the opening of the second hole, prevents the fluid from expanding in the valve body.

With this contrivance, the pressure of the fluid is balanced on one side and on the other side of the plate thus allowing a decrease of the pressure exerted on the blocking element.

Electromechanically actuated valves of the known type are not devoid of drawbacks among which there is the fact that they are particularly complex, in that they are a combination of a plurality of constructive elements that are difficult to assemble, and in that they involve complicated calibration steps.

Moreover, a further drawback of electromechanically actuated valves of the known type consists in the fact that the need to have a through hole in the sealing element, i.e. the membrane, while on the one hand allowing the decreasing of the force that the solenoid has to exert to close the duct, on the other hand compromises the resistance of the membrane, thus drastically decreasing its useful lifetime and preventing the separation of the elements in motion and the elements responsible for the motion from the fluid to be dispensed, a fact that inevitably prejudices the operation and reliability of the valve over time.

Other valves of the known type involve the substitution of the membrane by a gasket ring, for example of the O-ring type, associated with the piston and protruding circumferentially therefrom, that blocks the duct by internally interfering therewith.

This solution, however, has the drawback of not ensuring a perfect seal and a separation of the elements in motion, i.e. the piston, and the elements responsible for the motion, i.e. the linear actuator, springs and others, from the fluid to be dispensed due to the absence of the membrane.

The aim of the present invention is to eliminate the above-mentioned drawbacks in the background art by providing an electromechanically actuated membrane valve, particularly for branching ducts of a fluid of sprinkling and/or weed control systems and the like, that makes it possible to ensure long-lasting and high efficiency of the sealing elements and, at the same time, a decrease in the force exerted to move the elements adapted to closing/opening the branching duct.

Within this aim, an object of the invention is to provide an electromechanically actuated membrane valve that enables considerable savings in terms of electricity absorbed for the operation thereof, especially in dispensing systems in which it is necessary to have a high number of valves, independent of each other and individually controlled.

Another object of the invention is to ensure, with the varying of the flows and pressures in play in the branched fluids, a force exerted to move the elements for the closing/opening of the branching duct that is substantially contained and relatively constant or, at the most, variable within a substantially limited range of force values.

A further object of the invention is to provide a valve that has low encumbrances, is easy to wire and assemble and is easily adapted to the applications in use and, therefore, universally usable.

Another object of the present invention is to provide an electromechanically actuated membrane valve, particularly for branching ducts of a fluid of sprinkling and/or weed control systems and the like, that has a simple structure, is easy and practical to implement, safe to use and effective in operation, and relatively low-cost.

This aim and these and other objects are all achieved by an electromechanically actuated membrane valve, particularly for branching ducts of a fluid of sprinkling and/or weed control systems and the like, comprising a hollow valve body which can be associated with an end portion of a branching duct of a fluid or the like and contains in its interior a piston adapted to interact with a disk-like membrane for blocking said end portion of said branching duct, said piston being movable with respect to said valve body between an open configuration and a closed configuration of said valve and said branching duct comprising an internal duct and an external duct which are mutually coaxial, characterized in that it comprises means for reducing the passage section of at least one of said internal duct and said external duct, which are associated with said valve body and adapted to interact with said disk-like membrane on the side opposite to said piston for the hermetic isolation of said external duct with respect to said internal duct and vice versa.

Further characteristics and advantages of the present invention will become more apparent from the description of two preferred, but not exclusive, embodiments of an electromechanically actuated membrane valve, particularly for branching ducts of a fluid of sprinkling and/or weed control systems and the like, illustrated for the purposes of non-limiting example in the accompanying drawings wherein:

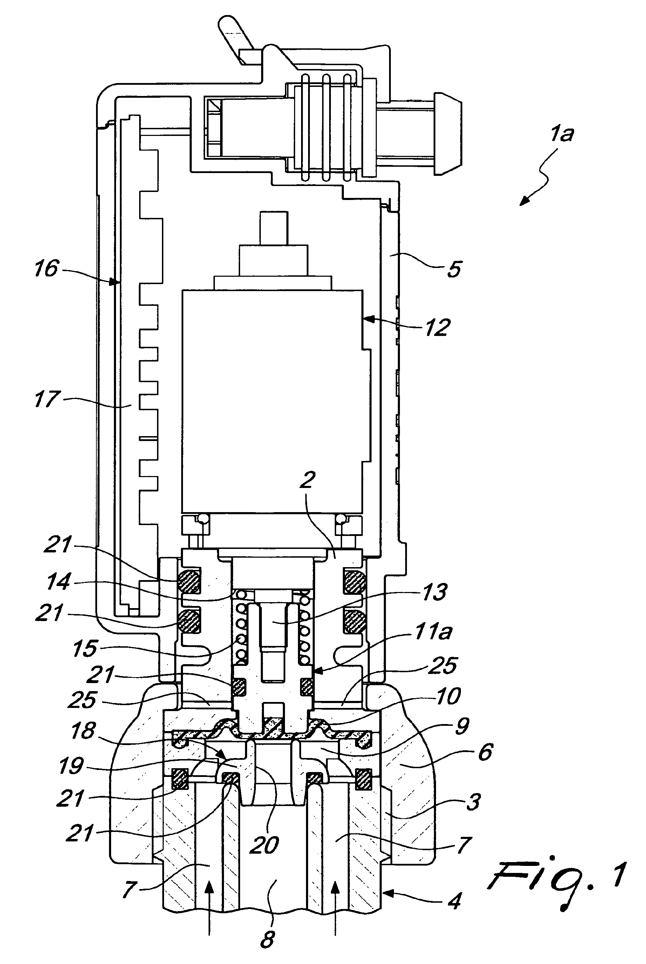

Figure 1 is a sectional side elevation view of a first embodiment of an electromechanically actuated membrane valve, particularly for branching ducts of a fluid of sprinkling and/or weed control systems and the like, according to the invention, in the closed configuration thereof;

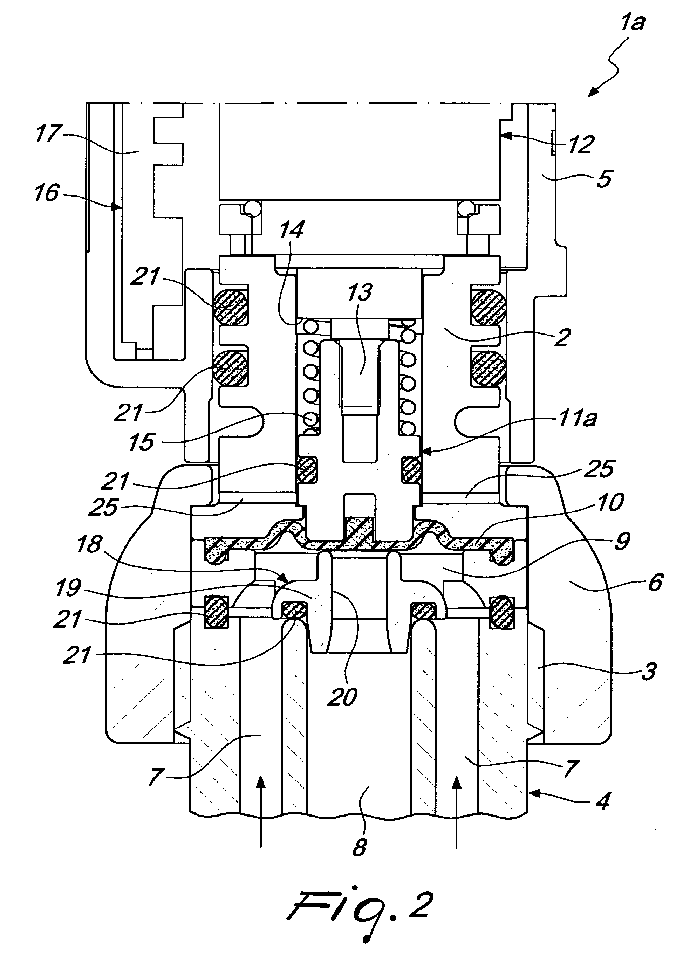

Figure 2 is an enlarged-scale view of a detail of the electromechanically actuated membrane valve shown in Figure 1;

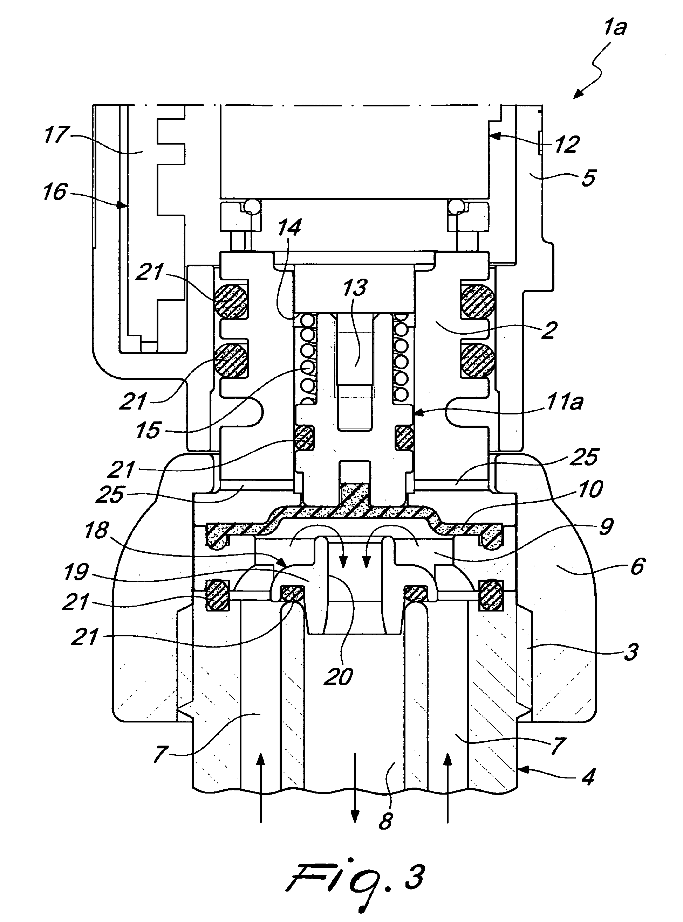

Figure 3 is an enlarged-scale view of a detail of the electromechanically actuated membrane valve shown in Figure 1 in the open configuration thereof;
Figure 4 is a sectional side elevation view of a second embodiment of an electromechanically actuated membrane valve, particularly for branching ducts of a fluid of sprinkling and/or weed control systems and the like, according to the invention, in the open configuration thereof;
Figure 5 is an enlarged-scale view of a detail of the electromechanically actuated membrane valve shown in Figure 4 in the closed configuration thereof;
Figure 6 is an enlarged-scale view of a detail of the electromechanically actuated membrane valve shown in Figure 4 in the closed configuration thereof after a lowering of pressure of the intercepted fluid.

With reference to the figures, an electromechanically actuated membrane valve, particularly for branching ducts of a fluid of sprinkling and/or weed control systems and the like, generally designated in the two embodiments proposed with the reference numerals la and 1b, comprises an outer shell 5 accommodating inside it a hollow valve body 2 that is substantially cylindrical in shape with a circular base, associable with an end portion 3 of a branching duct 4 of a fluid of a sprinkling and/or weed control system or the like.

More precisely, the valve body 2 is associated with a threaded ferrule 6 that can be engaged on the end portion 3 of the branching duct 4 and has a threading complementary to that of the threaded ferrule 6.

Moreover, the branching duct 4, shown in the accompanying figures, is of the type that has an external duct 7 annular in cross-section and an internal duct 8 that is circular in cross-section.

The external duct 7 and the internal duct 8, which are mutually coaxial with the latter inside the former, form, respectively, the supply duct and the drainage duct of the valves 1a and 1b and both converge in a communication chamber 9 formed inside the valve body 2.

More precisely, the communication chamber 9 is delimited in an upper region by a disk-like membrane 10 interacting with a piston 11a or 11b contained inside the valve body 2 and movable with respect to it between two positions corresponding, respectively, to the closed configuration of the valves 1a and 1b, in which the disk-like membrane 10 prevents communication between the external duct 7 and the internal duct 8, and an open configuration of the valves la and 1b, in which the external duct 7 and the internal duct 8 are in communication with each other.

As mentioned previously, the valves 1a and 1b are of the electromechanically actuated type and each comprises at least one electromechanical actuator 12, which can be of the stepped motor type or of any other type of drive means belonging to the state of the art and designed to actuate electromechanical actuators, arranged inside the valve body 2 for moving the pistons 11a and 11b between the closed configuration and the open configuration of the valves 1a and 1b.

More specifically, the movable element 13 of the electromechanical actuator 12 is directly connected to the piston 11a or 11b by means of a threaded coupling and, interposed between the piston 11a or 11b and a resting surface 14 formed by at least one of the electromechanical actuator 12 and the valve body 2, first elastic means 15 are provided, consisting for example in a first helical spring, which operate, as will be described in detail hereinafter, to move the piston 11 away from the resting surface 14 so as to promote the movement of the piston 11a or 11b from the open configuration of the valve 1a or 1b to the closed configuration of the valve la or 1b.

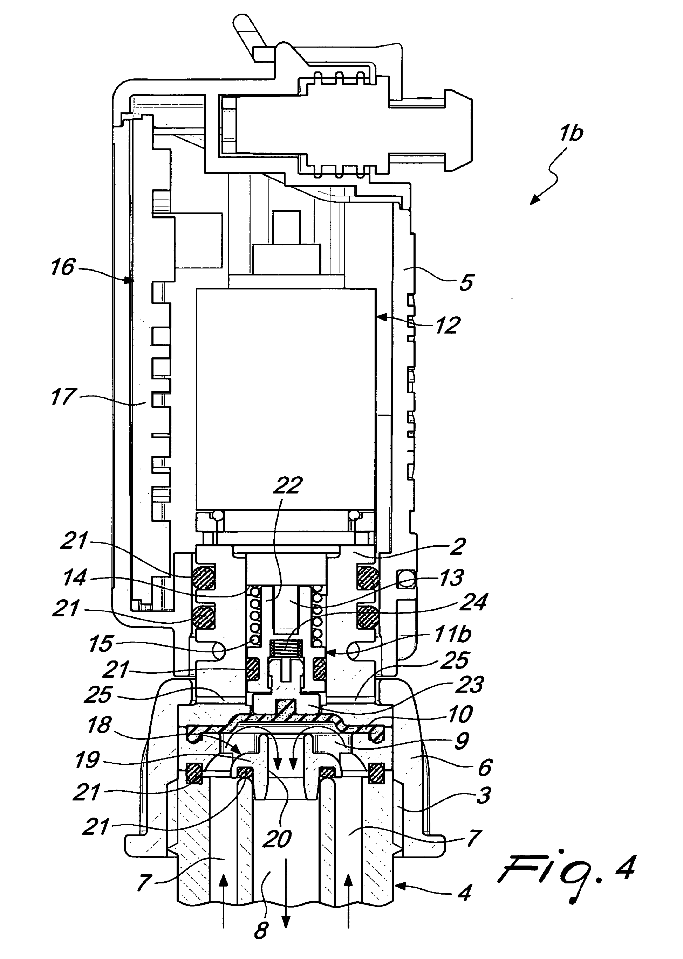

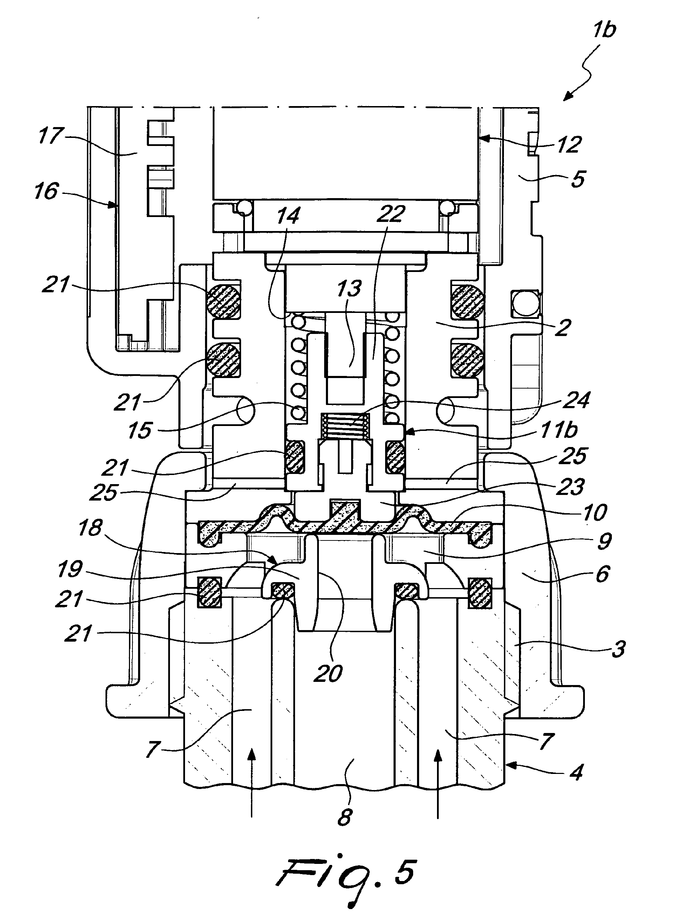

With reference to the second embodiment, shown in Figures 4 to 6, as will be better described hereinafter, for preventing unwanted dripping of the fluid intercepted by the valve 1b, the piston 11b is provided by a first part 22 associated with the movable element 13 of the electromechanical actuator 12 and a second part 23 designed to engage the disk-like membrane 10.

Advantageously, the first part 22 and the second part 23 are mutually associated by a mating of the snap-acting type with second elastic means 24 interposed consisting, for example, in a preloaded second helical spring adapted to send the second part 23 into contact with the disk-like membrane 10 thus closing the valve 1b after a lowering of the pressure of the fluid coming from the external duct 7 below a preset value of, for example, 0.5 bar.

Moreover, in both of the embodiments proposed, an aeration system is provided consisting in at least one venting hole 25, preferably two on opposite sides, of small diameter, formed radially in the valve body 2 and adapted to put the inner chamber between the seal of the pistons 11a and 11b and the disk-like membrane 10 into communication with the outside, in such a way as to allow the escape of the pressurized air which the continuous movement of the two seals tends to create, thus preventing the pressurized air from compromising the linear movement of the disk-like membrane 10 or leading to the malfunctioning of the valves 1a and 1b.

As concerns the control of the electromechanical actuator 12, it is entrusted to means 16 of management and control of the electronic type which consist, for example, in an electronic card 17 associated with the valve body 2 and contained inside the outer shell 5.

According to the invention, the valves 1a and 1b comprise means 18 of reducing the passage section of at least one of the internal duct 8 and the external duct 7, which are associated with the valve body 2 and are adapted to interact with the disk-like membrane 10 on the side opposite to the piston 11 for the hermetic isolation of the external duct 7 from the internal duct 8 and vice versa.

Advantageously, these reduction means 18 comprise at least one perforated bushing 19 which can be inserted coaxially into the internal duct 8 and forms a service duct 20 the inside diameter of which is smaller than the inside diameter of the internal duct 8.

Naturally, for ensuring a correct airtight seal of the valves 1a and 1b, among the various elements that make it up there are seal elements 21, such as O-rings and/or the like.

Operation of the electromechanically actuated membrane valves 1a and 1b, particularly for branching ducts of a fluid of sprinkling and/or weed control systems and the like, is described below.

Depending on the type of electromechanical actuator 12 used, i.e. depending on whether in the inactive configuration the movable element 13 is extracted from the body of the electromechanical actuator 12 or accommodated therein, the valve 1 can be of the type that is normally closed or normally open.

Thus starting from the closed configuration of the valves 1a and 1b in which the disk-like membrane 10, which is made of a rubber-like and elastically deformable material, is deformed under the action of the piston 11a or 11b to isolate the external duct 7 from the internal duct 8 and vice versa, the passage to the open configuration thereof occurs by way of the action of the electromechanical actuator 12 which, by making its movable element 13 retract, makes the piston 11a or 11b perform a translational movement away from the perforated bushing 19 thus allowing the disk-like membrane 10 to return to its initial geometry thus uncovering the communication chamber 9 of the valve, with a consequent passage of fluid from the external duct 7 to the internal duct 8 by passing through the service duct 20.

With regard to the first embodiment only, given the use for which the valve 1a is designed, in order to prevent unwanted dripping of the fluid, it is preferable, in the absence of electricity, for the movable element 13 to be arrangeable in its extracted position by the electromechanical actuator 12 so as to switch the valve 1a to its closed configuration, i.e. send the piston 11a into abutment with the perforated bushing 19 with the disk-like membrane 10 interposed between the two.

The anti-drip system just described can be implemented if the electromechanical actuator 12 is not of the stepped motor type. In fact, if an electromechanical actuator 12 of the stepped motor type is used, the movement of the movable element 13 of the electromechanical actuator 12 is made possible only by electrically actuating the electromechanical actuator 12.

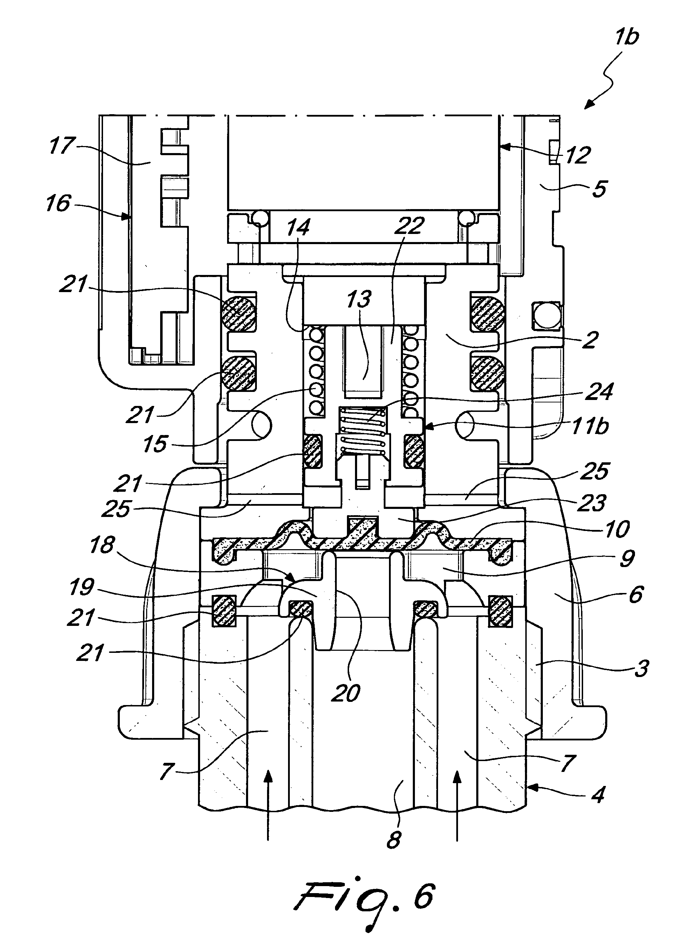

Differently, in the second embodiment, notwithstanding the use of stepped motors to provide the electromechanical actuator 12 in the valve 1b, for preventing unwanted dripping of the fluid, even with the valve 1b switched to its open configuration as shown in Figure 6, following a lowering of pressure, the second part 23 of the piston 11b, under the thrust of the second elastic means 24, overcomes the pressure exerted by the fluid and sends the disk-like membrane 10 into abutment against the perforated bushing 19 thus closing the valve 1b.

Moreover, in both of the embodiments proposed, for further ensuring the state of closure of the valves 1a and 1b, the movement of the pistons 11a and 11b is assisted by or, in a variation of the valves 1a and 1b, for example if a solenoid motor is used, can be exclusively caused by the action of the first elastic means 15.

In practice it has been found that the electromechanically actuated membrane valve, particularly for branching ducts of a fluid of sprinkling and/or weed control systems and the like, according to the present invention, fully achieves the set aim and objects in that it makes it possible to resolve the drawbacks of the known art by reducing the area of the membrane upon which the pressure of the fluid acts and therefore the thrust required of the electromechanical actuator and, consequently, the corresponding electrical absorption, while keeping to the standard sizing of the ducts.

Another advantage of the valve, according to the present invention, consists in that the first elastic means with which the valve is provided act in the direction of closure of the plug, thus further reducing the effort required. In the open state the thrust of the fluid cooperates with the action of the electromechanical actuator to compress the first elastic means.

A further advantage of the valve, according to the present invention, consists in that the geometry of the valve is such as to form a double end of travel for the piston: in closing to determine the squashing point of the membrane and prevent wear thereof, and in opening to have control over the point of arrest of the piston and to update the zero position of the stepped motors by means of the internal electronics.

Another advantage of the valve, according to the present invention, consists in that it provides an anti-drip system that enters into operation the moment when the pressure of the fluid to be intercepted falls below a threshold value.

The electromechanically actuated membrane valves, particularly for branching ducts of a fluid of sprinkling and/or weed control systems and the like, thus conceived, are susceptible of numerous modifications and variations, all of which are within the scope of the appended claims.

Moreover, all the details may be substituted by other, technically equivalent elements.

In practice the materials employed, provided they are compatible with the specific use, and the contingent dimensions and shapes, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An electromechanically actuated membrane valve (1a, 1b), particularly for branching ducts of a fluid of sprinkling and/or weed control systems and the like, comprising a hollow valve body (2) associated with an end portion (3) of a branching duct (4) of a fluid or the like and contains inside it a piston (11a, 11b) adapted to interact with a disk-like membrane (10) for blocking said end portion (3) of said branching duct (4), said piston (11a, 11b) being movable with respect to said valve body (2) between an open configuration and a closed configuration of said valve and said branching duct (4) comprising an internal duct (8) nd an external duct (7) which are mutually coaxial, the valve further comprising (18) for reducing the passage section of at least one of said internal duct (8) and said external duct (7), **characterized in that** said means (18) are associated with said valve body (2) and are adapted to interact with said disk-like membrane (10) on the opposite side with respect to said piston (11a, 11b) for the hermetic isolation of said external duct (7) with respect to said internal duct (8) and vice versa.

2. The valve (1a, 1b) according to claim 1, **characterized in that** said reduction means (18) comprise at least one perforated bushing (19), which can be inserted coaxially in said internal duct (8) and forms a service duct (20) the inside diameter of which is smaller than the inside diameter of said internal duct (8).

3. The valve (1a, 1b) according to one or more of the preceding claims, **characterized in that** it comprises at least one electromechanical actuator (12), which is associated with said valve body (2) so as to move said piston (11a, 11b) between said closed configuration and said open configuration.

4. The valve (1a, 1b) according to claim 3, **characterized in that** it comprises first elastic means (15), which are interposed between said piston (11a, 11b) and a resting contact surface (14), which is formed by at least one of said at least one electromechanical 15 actuator (12) and said valve body (2), said first elastic means (15) acting to move said piston (11a, 11b) away from said resting contact surface (14) in favor of the movement of said piston (11a, 11b) from said open configuration to said closed configuration.

5. The valve (1b) according to claimed 3 or 4, **characterized in that** said piston (11b) is formed by a first part (22), which is associated with said electromechanical actuator (12), and a second part (23), which is adapted to engage said disk-like membrane (10), said first part (22) and said second part (23) being mutually associated by a mating of the snap type with interposed second elastic means (24) which are adapted to place said second part (23) in contact with said disk-like membrane (10), closing said valve (1b) after a lowering of the pressure of the fluid that originates from said external duct (7) below a preset value.

6. The valve (1a, 1b) according to one or more of the preceding claims, **characterized in that** it comprises at least one venting hole (25), which is formed radially in said valve body (2) and adapted to connect the internal chamber between the seal of said piston (11a, 11b) and said disk-like membrane (10) to the outside so as to discharge the pressurized air that the continuous movement of the two seals generates.

7. The valve (1a, 1b) according to any of claims 3-5, **characterized in that** said electromechanical actuator (12) is of the type with a step motor.

8. The valve (1a, 1b) according to any of claims 3-7 , **characterized in that** it comprises means (17) of the electronic type for the management and control of said electromagnetic actuator (12).

## Patentansprüche

1. Ein elektromechanisch betätigtes Membranventil (1a, 1b), insbesondere für verzweigte Leitungen für eine Flüssigkeit in Sprinkler- und/oder Unkrautbekämpfungssysteman und dergleichen, das einen hohlen Ventilkörper (2) umfasst, verbunden mit einem Endabschnitt (3) einer verzweigten Leitung (4) für eine Flüssigkeit oder dergleichen, und in seinem Inneren einen Kolben (11a, 11b) enthält, ausgebildet, um mit einer scheibenartigen Membran (10) zu interagieren, um den Endabschnitt (3) der verzweigten Leitung (4) zu blockieren, wobei der Kolben (11a, 11b) im Verhältnis zu dem Ventilkörper (2) zwischen einer offenen Stellung und einer geschlossenen Stellung des Ventils bewegbar ist und wobei die verzweigte Leitung (4) eine innere Leitung (8) und eine äußere Leitung (7) umfasst, die miteinander koaxial sind, wobei das Ventil weitere Mittel (18) umfasst, um den Durchgangsquerschnitt wenigstens einer der inneren Leitung (8) und/oder der äußeren Leitung (7) zu reduzieren, **dadurch gekennzeichnet, dass** die Mittel (18) mit dem Ventilkörper (2) verbunden und so ausgebildet sind, um mit der scheibenartigen Membran (10) auf der dem Kolben (11a, 11b) gegenüberliegenden Seite zur hermetischen Abdichtung der äußeren Leitung (7) gegenüber der inneren Leitung (8) und umgekehrt zusammenzuwirken.

2. Das Ventil (1a, 1b) gemäß Anspruch 1, **dadurch gekennzeichnet, dass** die Reduktionsmittel (18) mindestens eine perforierte Buchse (19) umfassen, die koaxial in die innere Leitung (8) einsetzbar ist und einen Betriebskanal (20) bildet, dessen Innendurchmesser kleiner als der Innendurchmesser der inneren Leitung (8) ist.

3. Das Ventil (1a, 1b) gemäß einem oder mehreren der obigen Ansprüche, **dadurch gekennzeichnet, dass** es mindestens einen elektromechanischen Aktor (12) umfasst, der mit dem Ventilkörper (2) verbunden ist, um so den Kolben (11a, 11b) zwischen der geschlossenen Stellung und der offenen Stellung zu bewegen.

4. Das Ventil (1a, 1b) gemäß Anspruch 3, **dadurch gekennzeichnet, dass** es erste elastische Mittel (15) umfasst, die zwischen dem Kolben (11a, 11b) und einer Auflage-Kontaktfläche (14) angeordnet sind, welche von dem mindestens einen elektromechanischen Aktor (12) und/oder dem Ventilkörper (2) gebildet wird, wobei die ersten elastischen Mittel (15) wirken, um den Kolben (11a, 11b) von der Auflage-Kontaktfläche (14) weg zugunsten der Bewegung des Kolbens (11a, 11b) aus der offenen Stellung in die geschlossene Stellung zu bewegen.

5. Das Ventil (1b) gemäß Anspruch 3 oder 4, **dadurch gekennzeichnet, dass** der Kolben (11b) von einem ersten Teil (22) gebildet wird, der mit dem elektromechanischen Aktor (12) verbunden ist, und einem zweiten Teil (23), der ausgebildet ist, um die scheibenartige Membran (10) zu halten, wobei der erste Teil (22) und der zweite Teil (23) miteinander durch eine Schnappverbindung mit dazwischen angeordneten zweiten elastischen Mitteln (24) verbunden sind, die ausgebildet sind, um den zweiten Teil (23) in Kontakt mit der scheibenartigen Membran (10) zu bringen, wobei das Ventil (1b) nach einem Sinken des Drucks der Flüssigkeit, die von der äußeren Leitung (7) stammt, unter einen voreingestellten Wert geschlossen wird.

6. Das Ventil (1a, 1b) gemäß einem oder mehreren der obigen Ansprüche, **dadurch gekennzeichnet, dass** es mindestens ein Entlüftungsloch (25) umfasst, das radial in dem Ventilkörper (2) geformt und ausgebildet ist, um die innere Kammer zwischen der Abdichtung des Kolbens (11a, 11b) und der scheibenartigen Membran (10) mit der Außenseite zu verbinden, um so die Druckluft, die die kontinuierliche Bewegung der zwei Abdichtungen erzeugt, abzulassen.

7. Das Ventil (1a, 1b) gemäß einem beliebigen der Ansprüche 3-5, **dadurch gekennzeichnet, dass** der elektromechanische Aktuator (12) von der Art mit einem Schrittmotor ist.

8. Das Ventil (1a, 1b) gemäß einem beliebigen der Ansprüche 3-7, **dadurch gekennzeichnet, dass** es Mittel (17) eines elektronischen Typs für ein Management und eine Steuerung des elektromagnetischen Aktuators (12) umfasst.

## Revendications

1. Soupape à membrane actionnée électromécaniquement (1a, 1b), en particulier pour des conduits de branchement d'un fluide de systèmes d'aspersion et/ou de lutte contre les mauvaises herbes et similaires, comprenant un corps de soupape creux (2) associé à une portion d'extrémité (3) d'un conduit de branchement (4) d'un fluide ou similaire et contient à l'intérieur un piston (11a, 11b) adapté pour interagir avec une membrane de type disque (10) pour bloquer ladite portion d'extrémité (3) dudit conduit de branchement (4), ledit piston (11a, 11b) étant mobile par rapport audit corps de soupape (2) entre une configuration ouverte et une configuration fermée de ladite soupape et ledit conduit de branchement (4) comprenant un conduit interne (8) et un conduit externe (7) qui sont mutuellement coaxiaux, la soupape comprenant en outre des moyens (18) permettant de réduire la section de passage d'au moins l'un dudit conduit interne (8) et dudit conduit externe (7), **caractérisée en ce que** lesdits moyens (18) sont associés audit corps de soupape (2) et sont adaptés pour interagir avec ladite membrane de type disque (10) sur le côté opposé par rapport audit piston (11a, 11b) pour l'isolement hermétique dudit conduit externe (7) par rapport audit 5 conduit interne (8) et vice versa.

2. Soupape (1a, 1b) selon la revendication 1, **caractérisée en ce que** lesdits moyens de réduction (18) comprennent au moins une douille perforée (19), qui peut être insérée coaxialement dans ledit conduit interne (8) et forme un conduit de service (20) dont le diamètre intérieur est plus petit que le diamètre intérieur dudit conduit interne (8).

3. Soupape (1a, 1b) selon une ou plusieurs des revendications précédentes, **caractérisée en ce qu'**elle comprend au moins un actionneur électromécanique (12), qui est associé audit corps de soupape (2) de façon à déplacer ledit piston (11a, 11b) entre ladite configuration fermée et ladite configuration ouverte.

4. Soupape (1a, 1b) selon la revendication 3, **caractérisée en ce qu'**elle comprend des premiers moyens élastiques (15), qui sont interposés entre ledit piston (11a, 11b) et une surface de contact de repos (14), qui est formée par au moins l'un dudit au moins un actionneur électromécanique (12) et dudit corps de soupape (2), lesdits premiers moyens élastiques (15) agissant pour déplacer ledit piston (11a, 11b) en éloignement de ladite surface de contact de repos (14) en faveur du mouvement dudit piston (11a, 11b) de ladite configuration ouverte à ladite configuration fermée.

5. Soupape (1b) selon les revendications 3 ou 4, **caractérisée en ce que** ledit piston (11b) est formé par une première partie (22), qui est associée audit actionneur électromécanique (12), et une seconde partie (23), qui est adaptée pour enclencher ladite membrane de type disque (10), ladite première partie (22) et ladite seconde partie (23) étant mutuellement associées par un accouplement de type emboîtement avec des seconds moyens élastiques interposés (24) qui sont adaptés pour placer ladite seconde partie (23) en contact avec ladite membrane de type disque (10), en fermant ladite soupape (1b) après une réduction de la pression du fluide originaire dudit conduit externe (7) en dessous d'une valeur prédéfinie.

6. Soupape (1a, 1b) selon une ou plusieurs des revendications précédentes, **caractérisée en ce qu'**elle comprend au moins un évent (25) qui est formé radialement dans ledit corps de soupape (2) et adapté pour raccorder la chambre interne entre le joint dudit piston (11a, 11b) et ladite membrane de type disque (10) à l'extérieur de façon à décharger l'air pressurisé que le mouvement continu des deux joints génère.

7. Soupape (1a, 1b) selon l'une quelconque des revendications 3 à 5, **caractérisée en ce que** ledit actionneur électromécanique (12) est du type avec un moteur pas à pas.

8. Soupape (1a, 1b) selon l'une quelconque des revendications 3 à 7, **caractérisée en ce qu'**elle comprend un moyen (17) du type électronique pour la gestion et la commande dudit actionneur électromécanique (12).
